# EUROPÄISCHE PATENTSCHRIFT

(11) **EP 0 755 631 B1**
(45) Veröffentlichungstag und Bekanntmachung des Hinweises auf die Patenterteilung: **05.03.1997**
(21) Anmeldenummer: 95109295.6
(22) Anmeldetag: 16.06.1995
(51) Int. Cl.: A23F 5/16, A23F 5/02

(54) **Verfahren zur Qualitätsverbesserung von Rohkaffee durch Behandlung mit Wasserdampf und Wasser**
Process for improving the quality of green coffee by treatment with steam and water
Procédé pour améliorer la qualité des cafés vertes par traitement avec de la vapeur et de l'eau

(43) Veröffentlichungstag der Anmeldung: 29.01.1997
(73) Patentinhaber: J. J. Darboven GmbH & Co., 22113 Hamburg (DE)
(72) Erfinder: Darboven, Albert, D-22113 Hamburg (DE)
(74) Vertreter: von Raffay, Vincenz, Dipl.-Ing.

(56) Entgegenhaltungen:
- EP-A- 0 234 712
- EP-A- 0 425 824
- CA-A- 2 118 627
- DE-A- 2 030 376
- DE-B- 1 037 829
- DE-C- 576 515
- US-A- 4 015 022
- US-A- 4 540 591

## Beschreibung

Die Erfindung betrifft ein Verfahren zur Qualitätsverbesserung von Rohkaffee durch Behandlung mit Wasserdampf und Wasser bei erhöhter Temperatur und erhöhtem Druck in einem Druckbehälter unter Verringerung von im Röstkaffee auftretenden Reizstoffen wie Brenzcatechin, Pyrogallol und Hydrochinon.

Ein derartiges Verfahren ist beispielsweise aus der DE-PS 2212 171 bekannt, die davon ausgeht, daß die Behandlung durch feuchte Heißluft von 125°C in einer Trommel mit einer Wandtemperatur von 115°C bei ständiger Bewegung über einen Zeitraum von 30 Minuten durchgeführt wird, daß die daran anschließende Behandlung bei vermindertem Druck bis zu einem Endvakuum von 100 Torr bei gleichzeitiger Absenkung der Wandtemperatur der Trommel während eines Zeitraums von 10 bis 15 Minuten auf 40°C über einen Zeitraum von 30 Minuten stattfindet, und daß die Behandlung mit Heißluft bei vermindertem Druck insgesamt sechsmal durchgeführt wird und ihrerseits in der Beschreibung auf das ältere Lendrich-Verfahren nach der DE-PS 576 515 hinweist. Auch in den letzten Jahren hat man immer wieder versucht, die grünen Rohkaffeebohnen qualitativ zu verbessern, um bestimmte, unangenehme Aromanoten zu beseitigen, die für erhebliche Qualitätsbeeinträchtigungen verantwortlich sind (vgl. hierzu z.B. die DE-OS 39 36 020). Nach der dortigen Lehre soll der Wassergehalt der Rohkaffeebohnen auf 30 - 45% erhöht und dieselben mit Sattdampf von 135 - 140°C bei 3 -4 bar 60 - 120 Minuten behandelt werden. Folgt man hingegen der DE-OS 20 30 376, so beträgt der gewünschte Feuchtigkeitswert nur 10 - 20%, der dadurch erzielt wird, daß die Kaffeebohnen 1 - 5 Minuten in einem Druckgefäß bei 3,5 - 9,8 kg/cm² bei Sattdampftemperaturen behandelt werden und anschließend die Dämpfe bei verringertem Druck von 0,56 kg/cm² abgelassen werden. Ähnlich kurze Behandlungszeiten erfährt man ebenfalls aus der EP-B-0 234 712, die jedoch wiederum Feuchtigkeitswerte von 35 - 45% für die sog. Dämpfung fordert. Schließlich wird in der EP-A- 0 107 171 auf W.A. König, W. Rahn und R. Vetter, 9. Int. Wiss. Koll. über Kaffee, London 1980, ASIC Paris, 1981, S. 145 - 149) verwiesen, wonach durch den Wasserdampf emetische Abbauprodukte der Chlorogensäure in geringem Umfang entfernt werden, so daß sich die Veränderungen bei Wasserdampfbehandlung jedoch in bescheidenem Rahmen halten, weshalb ein Adsorptionsverfahren auf der Basis mit Ionenaustauschern vorgeschlagen wird.

Die obigen Ausführungen zeigen, daß der Stand der Technik ein uneinheitliches Bild für den Fachmann darstellt, da unterschiedlichste Lösungswege angeboten werden, die optimale Ergebnisse vermissen lassen. Der vorliegenden Erfindung liegt deshalb die Aufgabe zugrunde, das eingangs beschriebene Verfahren derart weiterzuentwickeln und zu optimieren, daß ein Auftreten der genannten Reizstoffe im Röstkaffee, dem Endprodukt, bestmöglich verhindert und seine physiologische Wirkung somit als stark verbessert angesehen werden kann. Ein weiteres Ziel der Erfindung ist es natürlich, den Kostenaufwand für die Durchführung eines solchen Verfahrens möglichst gering zu halten.

Diese Aufgaben werden erfindungsgemäß dadurch gelöst, daß
a) der Wassergehalt der Kaffeebohnen anfänglich auf 22 - 28 % erhöht wird, indem zum Erweichen der Kaffeebohnen zuerst 10 - 30 Min. Wasserdampf mit einem Druck von 1,3 - 1,5 bar zugeführt wird und dann Wasser zugegeben wird,
b) und eine Temperatur im Bereich von < 95°C eingestellt wird, und daß
c) anschließend die Kaffeebohnen derart auf ca. 130 - 150 °C 5 bis 20 Minuten aufgeheizt werden, daß in den Bohnen befindliche Feuchtigkeit verdampft, danach
d) der im Druckbehälter entstandene Druck um 0,5 - 0,1 bar auf 0,8 - 1,4 bar durch kontinuierliches Ablassen des mit Chlorogensäure angereicherten Wasserdampfes bei gleichzeitiger kontinuierlicher Zugabe vom frischem Wasserdampf abgesenkt und während einer Zeitdauer von 130 - 180 Minuten bei diesem Druck gehalten wird, und daß
e) abschließend der Druckbehälter zunächst entspannt, und dann während 30 - 120 Minuten mittels einer Vakuumpumpe die überschüssige Restfeuchte aus den Rohkaffeebohnen verdampft und abgeführt wird, bis sich die ursprüngliche Feuchte von ca. 10 - 12 % einstellt.

Die Erfindung liefert also eine fein abgestimmte Verfahrensweise, deren einzelne Schritte besonders eingestellte Parameter (p, T, t und % H₂O) aufweisen, damit die optimalen Resultate erzielt werden. Gerade mit den beanspruchten Wertebereichen wird sichergestellt, daß die gesamten Kaffeebohnen gleichmäßig durchdrungen werden, so daß der Wasserdampf mit den flüchtigen isomeren Chlorogensäuren überall innig in Kontakt gelangt und so aus der Bohne und letztendlich aus dem Druckbehälter heraus abführen kann, ohne die Bohne selbst im Sinne des Aufplatzens zu beschädigen.

Schädliche Teilextraktionen durch z.B. freies Wasser, werden so vermieden, die sonst einen Verlust wertvoller Kaffeeinhaltsstoffe hervorrufen könnten. Anders gesagt, geht die Erfindung in ihrer ersten Phase von einem An- oder Aufweichen der Kaffeebohne aus, wobei in der zweiten Phase freies Wasser hinzugefügt wird, das jedoch unmittelbar von den Kaffeebohnen weiter aufgenommen wird, so daß die vorhandene Chlorogensäure überall in das Wasser diffundieren kann. In der dritten Phase wird dann die in den Bohnen befindliche Feuchtigkeit verdampft und zusammen mit der Chlorogensäure abgeführt und frischer Wasserdampf kontinuierlich zugeführt.

Von besonderer erfindungsgemäßer Bedeutung ist jedoch die Tatsache des Festlegens des anfänglichen Wassergehalts von 22 bis 28 %, da Versuche gezeigt haben, daß mit Werten unter 22% Wassergehalt kein verbesserter Transport der Chlorogensäuren erreicht wird und Werte ab 30 % Wassergehalt zur Verschlammung und noch ungünstigeren Ergebnissen führen können.

Weitere Vorteile und Merkmale gehen aus den Unteransprüchen hervor, die auch gemeinsam mit dem Hauptanspruch von erfinderischer Bedeutung sein können.

Im folgenden wird die Erfindung anhand eines Ausführungsbeispiels in Verbindung mit der Zeichnung näher beschrieben.

Es zeigt:

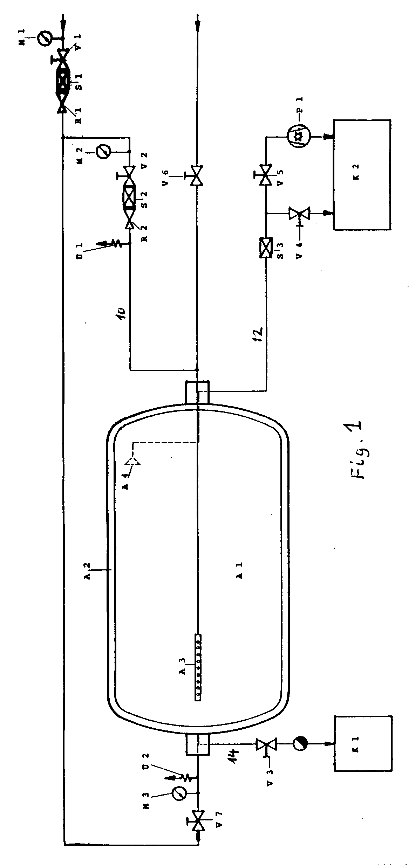

- Fig. 1: eine Schemaskizze einer Vorrichtung zur Durchführung des erfindungsgemäßen Verfahrens.

Kernstück der Vorrichtung zur Durchführung des erfindungsgemäßen Verfahren ist ein Druckbehälter oder Autoklav A1, der eine Mantelheizung A2 besitzt. In diesem Autoklaven A1, der auf einer drehbaren Welle (nicht gezeigt) gelagert ist, ist mittig eine perforierte Lanze A3 angeordnet, die sich in der linken Hälfte, beabstandet vom dortigen Ende, befindet. Die perforierte Lanze A3 wird mit Wasser und/oder Wasserdampf über die Leitung 10 gespeist. Das Vorsehen geeigneter Reduzierventile R1, R2, Dampfeinlaßventile V1, V2, sowie Dampfauslaßventile V3, V4, V5, Wasserventil V6, Überdruckventile Ü1, Ü2 sowie das weitere Vorsehen von Manometern (M1 für Vordruck, M1 für Autoklavendruck und M3 für die Mantelheizung) sowie Schmutzfänger S1 und deren fachgerechte Anordnung in entsprechenden Leitungen, liegt sämtlich im Rahmen des fachmännischen Könnens. Im übrigen läßt sich näheres der Zeichnung entnehmen. Im folgenden wird ein Beispiel des erfindungsgemäßen Verfahrens angegeben, auf das die Erfindung jedoch nicht beschränkt ist. Es dürfte einleuchten, daß der Fachmann gewisse Modifikationen vornehmen kann, ohne jedoch den Rahmen der Erfindung, wie er im Hauptanspruch beschrieben ist, zu verlassen.

In der rechten unteren Hälfte des Autoklaven A1, beabstandet vom Mantel A2 und dem rechten Ende, ist eine Dampfabführung A4 angeordnet, die an eine Leitung 12 angeschlossen ist, welche über entsprechende Schmutzfänger S3, Ventile V4 und V5 und eine Vakuumpumpe P1 zu einem Kondensatbehälter A2 führt. Am gegenüberliegenden Ende des Autoklaven A2 ist am Boden eine Abführleitung 14 angeordnet, die über ein Ventil V3 zu einem Kondensatbehälter K1 führt.

### Beispiel:

1.000 kg Rohkaffeemischung der Sorte IDEE CLASSIC^{(R)} (zentralamerikanische und ostafrikanische Kaffeebohnen) werden in den vorgeheizten 3000- l-Autoklaven (ca. 80°C) innerhalb von 5 Minuten eingefüllt.

In den geschlossenen Autoklaven werden mit einem Druck von 1,4 bar 20 Minuten 132 l Wasserdampf zugeführt.

Zu den so in den Autoklaven aufgeweichten Rohkaffeebohnen wird eine auf 80°C vorgewärmte Wassermenge von 150 l eingefüllt. Durch den sich drehenden Autoklaven (Trommeldurchmesser 140 cm), (4,5 U/min) wird eine gleichmäßige Befeuchtung der einzelnen Bohnen auf ca. 26% bei 90°C erreicht.

Die so vorbehandelten Rohkaffeebohnen werden nunmehr durch den Dampfdruck (1,4 bar) und die Mantelheizung so auf 140°C aufgeheizt, daß in den Bohnen befindliche Feuchtigkeit verdampft. Nach 15 Minuten wird das Dampfauslaßventil V3 so geöffnet, daß etwa 0,3 bar derart abgelassen werden, daß sich im Autoklaven bei kontinuierlicher Zufuhr von Frischdampf ein stetiger Druck von 1,1 bar einstellt.

Dieser Reinigungsprozeß wird bei drehendem Autoklaven A1 über 150 Minuten bei ca. 140°C durchgeführt.

Nach Abschluß dieser Phase wird der Autoklav A1 über ein Ventil V entspannt und mit dem darin befindlichen Rohkaffee durch eine Vakuumpumpe P1 auf -0,8 bis -0,9 bar gebracht.

Durch diese weitere Verdampfung über 80 Min. der in den Rohbohnen befindlichen Restfeuchtewerden o.e. unerwünschte Kafeeinhaltsstoffe, insbesondere Chlorogensäure, aus der später durch die Röstung die bekannten emetisch wirksamen Röstreizstoffe entstehen, auf das angestrebte Maß reduziert, ohne daß durch freies Wasser eine Teilextraktion, respektive der Verlust von wertvollen anderen Kaffeeinhaltsstoffen entsteht.

Die fertig veredelten Rohkaffeebohnen werden nach Durckausgleich aus dem Autoklaven in ein Kühlsystem entleert und auf Raumtemperatur gekühlt. Die anschließende Röstung erfolgt nach üblichen Bedingungen.

Die nach dem erfindungsgemäßen Verfahren hergestellten Kaffeebohnen wurden geröstet, extrahiert und hinsichtlich ihrer Röstreizstoffe Brenzcatechin, Hydrochinon und Pyrogallol mittels GC-FID untersucht. Wie in der nachstehenden Tabelle dargestellt, wurden im Extrakt der Röstkaffeeproben, die nach dem erfindungsgemäßen Veredelungsverfahren hergestellt worden waren, Gehalte an Brenzcatechin, Hydrochinon und Pyrogallol bestimmt, die signifikant aus gegenüber herkömmlichen Verfahren hergestelltem Röstkaffee bei vergleichbarem Farbwert deutlich verringerte Werte aufzeigen.

| Versuchsart(Werte in mg/kg) | Brenzcatechin | Hydrochinon | Pyrogallol |
|---|---|---|---|
| unbearbeitet | 246 | 27 | 87 |
| herkömmliches Verfahren | 143 | 19 | 59 |
| erfindungsgemäßes Verfahren | 58 | 12 | 35 |
| Verringerung der erfindungsgemäßen Gehalte gegenüber herkömmlichen Verfahren (in ca.%) | 60 | 37 | 41 |

Das erfindungsgemäße Verfahren führt also zu einer deutlich verbesserten Verringerung der aus der Chlorogensäure entstehenden als emetisch wirksam bekannten Röstreizstoffe. Individuelle Geschmacksproben wurden merkbar positiv (mild, rein) empfunden.

### LEGENDE ZUM AUTOKLAVEN-SCHEMA

- A 1: - Autoklaven
- A 2: - Autoklaven - Mantelheizung
- A 3: - Perforierte Lanze
- A 4: - Dampfabführung
- K 1: - Kondensatbehälter 1
- K 2: - Kondensatbehälter 2
- M 1: - Manometer Dampf-Vordruck
- M 2: - Manometer Autoklavendruck
- M 3: - Manometer Mantelheizung
- P 1: - Vakuumpumpe
- S 1: - Schmutzfänger
- S 2: - Schmutzfänger
- S 3: - Schmutzfänger
- Ü 1: - Sicherheitsventil Autoklav
- Ü 2: - Sicherheitsventil Mantelheizung
- V 1: - Hauptdampfventil
- V 2: - Dampfeinlaßventil Autoklav - Innenraum
- V 3: - Dampfauslaßventil Mantelheizung
- V 4: - Dampfablaßventil Autoklav - Innenraum
- V 5: - Dampfablaßventil über Vakuumpumpe
- V 6: - Wasserventil
- V 7: - Dampfeinlaßventil Mantelheizung

## Patentansprüche

1. Verfahren zur Qualitätsverbesserung von Rohkaffee durch Behandlung mit Wasserdampf und Wasser bei erhöhter Temperatur und erhöhtem Druck in einem Druckbehälter unter Verringerung von im Röstkaffee auftretenden Reizstoffen wie Brenzcatechin, Pyrogallol und Hydrochinon, dadurch gekennzeichnet, daß
a) der Wassergehalt der Kaffeebohnen anfänglich auf 22 - 28 % erhöht wird, indem zum Erweichen der Kaffeebohnen zuerst 10 - 30 Min. Wasserdampf mit einem Druck von 1,3 - 1,5 bar zugeführt wird und dann Wasser zugegeben wird,
b) und eine Temperatur im Bereich von < 95°C eingestellt wird, und daß
c) anschließend die Kaffeebohnen derart auf ca. 130 - 150 °C 5 bis 20 Minuten aufgeheizt werden, daß in den Bohnen befindliche Feuchtigkeit verdampft, danach
d) der im Druckbehälter entstandene Druck um 0,5 - 0,1 bar auf 0,8 - 1,4 bar durch kontinuierliches Ablassen des mit Chlorogensäure angereicherten Wasserdampfes bei gleichzeitiger kontinuierlicher Zugabe vom frischem Wasserdampf abgesenkt und während einer Zeitdauer von 130 - 180 Minuten bei diesem Druck gehalten wird, und daß
e) abschließend der Druckbehälter zunächst entspannt, und dann während 30 - 120 Minuten mittels einer Vakuumpumpe die überschüssige Restfeuchte aus den Rohkaffeebohnen verdampft und abgeführt wird, bis sich die ursprüngliche Feuchte von ca. 10 - 12 % einstellt.

2. Verfahren nach Anspruch 1, dadurch gekennzeichnet, daß der Wassergehalt der Kaffeebohnen anfänglich auf 24 bis 27 % erhöht wird.

3. Verfahren nach Anspruch 1, dadurch gekennzeichnet, daß die so behandelten Rohkaffeebohnen geröstet werden und eine verbesserte Bekömmlichkeit aufweisen.

4. Verfahren nach einem oder mehreren der vorstehenden Ansprüche, dadurch gekennzeichnet, daß die Verfahrensstufe c) innerhalb von 10 bis 15 Minuten durchgeführt wird.

5. Verfahren nach einem oder mehreren der vorstehenden Ansprüche, dadurch gekennzeichnet, daß die Verfahrensstufe d) im Bereich von 0,9 bis 1,3 bar für 140 bis 150 Minuten durchgeführt wird.

6. Verfahren nach einem oder mehreren der vorstehenden Ansprüche, dadurch gekennzeichnet, daß der Druckbehälter eine Trommel ist, die ständig während der Verfahrensstufen a) bis e) gedreht wird.

7. Verfahren nach einem oder mehreren der vorstehenden Ansprüche, dadurch gekennzeichnet, daß der Wasserdampf in die Trommel über eine perforierte Lanze eingegeben wird, die mittig im Druckbehälter, auf der einen Seite liegend, angeordnet ist.

8. Verfahren nach einem oder mehreren der vorstehenden Ansprüche, dadurch gekennzeichnet, daß das in der Stufe a) zugegebene Wasser auf 60 bis 80°C vorgewärmt ist.

9. Verfahren nach einem oder mehreren der vorstehenden Ansprüche, dadurch gekennzeichnet, daß in der Verfahrensstufe e) die Vakuumpumpe einen Unterdruck von -0,8 bis -0,9 bar über einen Zeitraum von 50 bis 80 Minuten erzeugt.

10. Verfahren nach einem oder mehreren der vorstehenden Ansprüche, dadurch gekennzeichnet, daß der Druckbehälter eine Mantelheizung aufweist, die mit überhitztem Wasserdampf gespeist wird.

## Claims

1. Process for the quality improvement of raw coffee by treatment with steam and water at elevated temperature and elevated pressure in a pressure vessel, whilst reducing the stimulants such as pyrocatechol, pyrogallol and hydroquinone present in roast coffee, characterized in that
a) the water content of the coffee beans is initially raised to 22 to 28%, in that for softening the coffee beans initially for 10 to 30 minutes steam is supplied under a pressure of 1.3 to 1.5 bar and then water is added,
b) and a temperature in the range 95°C is set and that
c) subsequently the coffee beans are heated for 5 to 20 minutes to approximately 130 to 150°C in such a way that the moisture present in the beans is evaporated and then
d) the pressure in the pressure vessel is decreased by 0.5 to 0.1 bar to 0.8 to 1.4 bar by continuously drawing off the chlorogenic acid-enriched steam, accompanied by a simultaneous continuous addition of fresh steam and is maintained at this pressure for 130 to 180 minutes and that
e) finally the pressure vessel is initially relieved and then for 30 to 120 minutes and using a vacuum pump the excess residual moisture is evaporated from the raw coffee beans and removed until the original moisture content of approximately 10 to 12% is obtained.

2. Process according to claim 1, characterized in that the water content of the coffee beans is initially raised to 24 to 27%.

3. Process according to claim 1, characterized in that the thus treated raw coffee beans are roasted and have an improved digestibility.

4. Process according to one or more of the preceding claims, characterized in that process stage c) is performed within 10 to 15 minutes.

5. Process according to one or more of the preceding claims, characterized in that process stage d) is performed in the range 0.9 to 1.3 bar for 140 to 150 minutes.

6. Process according to one or more of the preceding claims, characterized in that the pressure vessel is a drum, which is continuously rotated during process stages a) to e).

7. Process according to one or more of the preceding claims, characterized in that the steam is introduced into the drum by means of a perforated lance, which is arranged centrally in the pressure vessel lying on one side.

8. Process according to one or more of the preceding claims, characterized in that the water added in stage a) is preheated to 60 to 80°C.

9. Process according to one or more of the preceding claims, characterized in that in process stage e) the vacuum pump produces a vacuum of -0.8 to -0.9 bar over a period of 50 to 80 minutes.

10. Process according to one or more of the preceding claims, characterized in that the pressure vessel has a jacket heating, which is supplied with superheated steam.

## Revendications

1. Procédé pour l'amélioration de la qualité du café brut par traitement avec de la vapeur d'eau et de l'eau à une température élevée et avec une pression élevée dans un réservoir sous pression en réduisant les excitants qui apparaissent dans le café torréfié comme le brenzcatéchine, le pyrogallole et l'hydrochinone, caractérisé en ce que
a) la teneur en eau des grains de café est augmentée au début à 22 à 28% en amenant tout d'abord pendant 10 à 30 minutes de la vapeur d'eau avec une pression de 1,3 à 1,5 bar pour ramollir les grains de café et en ajoutant ensuite de l'eau,
b) et en réglant une température de l'ordre de < 95° C et
c) qu'ensuite les grains de café sont réchauffés à environ 130 à 150° C jusqu'à 20 minutes, que l'humidité qui se trouve dans les grains est évaporée, ensuite
d) que la pression créée dans le réservoir sous pression est abaissée de 0,5 à 0,1 bar à 0,8 à 1,4 bar en évacuant continuellement la vapeur d'eau enrichie d'acide chlorogénique tout en ajoutant simultanément continuellement de la vapeur d'eau fraîche et que cette pression est maintenue pendant une durée de 130 à 180 minutes et que
e) pour terminer, le réservoir sous pression est tout d'abord détendu et l'humidité résiduelle excédentaire est évaporée et évacuée des grains de café brut pendant 30 à 120 minutes au moyen d'une pompe à vide jusqu'à ce que l'humidité d'origine d'environ 10 à 12 % se règle.

2. Procédé selon la revendication 1, caractérisé en ce que la teneur en eau des grains de café est augmentée initialement à 24 à 27 %.

3. Procédé selon la revendication 1, caractérisé en ce que les grains de café ainsi traités sont torréfiés et sont plus digestibles.

4. Procédé selon l'une ou plusieurs des revendications précédentes, caractérisé en ce que l'étape de procédé c) est réalisée en 10 à 15 minutes.

5. Procédé selon l'une ou plusieurs des revendications précédentes, caractérisé en ce que l'étape de procédé d) est réalisée dans la plage de 0,9 à 1,3 bar pendant 140 à 150 minutes.

6. Procédé selon l'une ou plusieurs des revendications précédentes, caractérisé en ce que le réservoir sous pression est un tambour qui tourne continuellement pendant les étapes de procédé a) à e).

7. Procédé selon l'une ou plusieurs des revendications précédentes, caractérisé en ce que la vapeur d'eau est alimentée dans le tambour par une lance perforée qui est placée au milieu du réservoir sous pression en étant à plat sur un côté.

8. Procédé selon l'une ou plusieurs des revendications précédentes, caractérisé en ce que l'eau ajoutée à l'étape a) est préchauffée à 60 à 80° C.

9. Procédé selon l'une ou plusieurs des revendications précédentes, caractérisé en ce que dans l'étape de procédé e) la pompe à vide produit une dépression de -0,8 à -0,9 bar pendant une période de 50 à 80 minutes.

10. Procédé selon l'une ou plusieurs des revendications précédentes, caractérisé en ce que le réservoir sous pression présente un chauffage de la chemise qui est alimenté avec de la vapeur à eau surchauffée.
